# EUROPÄISCHE PATENTSCHRIFT

(11) **EP 3 655 730 B1**
(45) Veröffentlichungstag und Bekanntmachung des Hinweises auf die Patenterteilung: **22.01.2025**
(21) Anmeldenummer: 18733574.0
(22) Anmeldetag: 20.06.2018
(51) Int. Cl.: G01F 1/684, G01P 5/12, G01F 1/69, G01F 15/00

(54) **THERMISCHES DURCHFLUSSMESSGERÄT**
THERMAL FLOWMETER
DÉBITMÈTRE THERMIQUE

(30) Priorität: 20.07.2017 DE 102017116408
(43) Veröffentlichungstag der Anmeldung: 27.05.2020
(73) Patentinhaber: Endress+Hauser Wetzer GmbH+Co. KG, 87484 Nesselwang (DE); Innovative Sensor Technology IST AG, 9642 Ebnat-Kappel (CH)
(72) Erfinder: UMKEHRER, Alfred, 87659 Hopferau (DE); KROGMANN, Florian, 8280 Kreuzlingen (CH)
(74) Vertreter: Koslowski, Christine Adelheid
(86) Internationale Anmeldenummer: PCT/EP2018/066445
(87) Internationale Veröffentlichungsnummer: WO 2019/015912

(56) Entgegenhaltungen:
- DE-B3- 102014 119 223
- DE-B3- 102014 119 223
- US-A1- 2008 184 790
- US-A1- 2008 184 790
- US-B2- 8 590 360
- US-B2- 8 590 360

## Beschreibung

Die Erfindung bezieht sich auf eine Vorrichtung zur Bestimmung und/oder Überwachung des Massedurchflusses und/oder der Durchflussgeschwindigkeit eines strömungsfähigen Mediums durch eine Rohrleitung und ein Verfahren zur Herstellung einer erfindungsgemäßen Vorrichtung. Die Vorrichtung umfasst zumindest ein Heizelement, welches Heizelement zumindest teilweise und/oder zeitweise mit dem Medium in thermischem Kontakt steht und welches Heizelement zumindest zeitweise mittels eines Heizsignals beaufschlagbar ist.

Thermische oder auch kalorimetrische Durchflussmessgeräte finden vielfach Anwendung im Bereich der Prozess- und/oder Automatisierungstechnik. Entsprechende Feldgeräte werden von der Anmelderin beispielsweise unter der Bezeichnung t-switch, t-trend oder t-mass hergestellt und vertrieben. Die den thermischen oder auch kalorimetrischen Durchflussmessgeräten zugrundeliegenden Messprinzipien sind entsprechend an sich ebenfalls aus dem Stand der Technik bekannt. Grundsätzlich lässt sich der Durchfluss, insbesondere der Massedurchfluss, auf zwei unterschiedliche Arten bestimmen.

Gemäß einem ersten Messprinzip wird ein Sensorelement einem durch eine Rohrleitung strömenden Medium ausgesetzt und derart beheizt, dass seine Temperatur im Wesentlichen konstant bleibt. Bei bekannten, und zumindest zeitweise konstanten Mediumseigenschaften, wie der Mediumstemperatur, dessen Dichte oder auch Zusammensetzung, kann anhand des zum Halten der Temperatur auf den konstanten Wert notwendigen Heizleistung der Massedurchfluss des Mediums durch die Rohrleitung ermittelt werden. Unter der Mediumstemperatur sei dabei jene Temperatur verstanden, welche das Medium ohne einen zusätzlichen Wärmeeintrag eines Heizelements aufweist.

Bei einem alternativen Messprinzip wird dagegen das Heizelement mit konstanter Heizleistung betrieben und die Temperatur des Mediums stromabwärts des Heizelements gemessen. In diesem Falle gibt die gemessene Temperatur des Mediums Aufschluss über den Massedurchfluss.

Im Falle beider beschriebener Messprinzipien kann, insbesondere bei variabler Mediumstemperatur, außerdem ein zweites Sensorelement zur Temperaturmessung des Mediums verwendet werden.

Die Heizelemente von thermischen Durchflussmessgeräten sind häufig in Form von Widerstandsheizungen ausgeführt. Beispielsweise werden sogenannte Widerstandselemente, z. B. RTD-Widerstandselemente (Resistance Temperature Detector), insbesondere Platinelemente, eingesetzt, wie sie unter den Bezeichnungen PT10, PT100, und PT1000 auch kommerziell erhältlich ist. Die Widerstandselemente werden über die Umsetzung von ihnen zugeführter elektrischer Leistung, z. B. in Folge einer erhöhten Stromzufuhr, erwärmt.

Zur Erfassung des Massedurchflusses und/oder der Strömungsgeschwindigkeit wird das jeweilige Heizelement mit dem Medium zumindest zeitweise und/oder teilweise in thermischem Kontakt gebracht. Dazu kann das Sensorelement beispielsweise entweder direkt an oder in die Rohrleitung eingebracht werden, oder in einen Sensorkopf integriert werden, welcher wiederum in eine bestehende Rohrleitung einbaubar ist. Diese beiden und auch andere im Stand der Technik beschriebene Möglichkeiten sind Gegenstand der vorliegenden Erfindung.

Die Bestimmung des Durchflusses basiert grundsätzlich darauf, dass sich der thermische Übergangswiderstand zwischen dem jeweiligen Sensorelement und dem strömenden Medium jeweils mit der vorherrschenden Strömungsgeschwindigkeit ändert. Ist in der Rohrleitung beispielsweise keine Strömung vorhanden, erfolgt die Ableitung der Wärme von dem Heizelement über Wärmeleitung, Wärmestrahlung und ggf. auch über freie Konvektion innerhalb des Mediums. Zur Aufrechterhaltung einer bestimmten Temperaturdifferenz nach dem ersten der beiden beschriebenen Messprinzipien wird dann beispielsweise eine zeitlich konstante Wärmemenge benötigt. Beim Vorliegen einer Strömung hingegen kommt es zu einer zusätzlichen Abkühlung des Sensorelements durch das vorbeiströmende, insbesondere kältere, Medium. Es tritt ein zusätzlicher Wärmetransport aufgrund von erzwungener Konvektion auf. Entsprechend muss also in Folge einer Strömung eine erhöhte Heizleistung eingespeist werden, um eine feste Temperaturdifferenz aufrecht halten zu können.

Der funktionale Zusammenhang zwischen der Heizleistung bzw. gemessenen Temperatur und dem Massedurchfluss und/oder der Durchflussgeschwindigkeit des Mediums durch die Rohrleitung kann auch mittels des sogenannten Wärmeübertragungskoeffizienten ausgedrückt werden. Daneben haben verschiedene thermophysikalische Eigenschaften des Mediums sowie der in der Rohrleitung herrschende Druck einen Einfluss auf den gemessenen Durchfluss. Um auch der Abhängigkeit des Durchflusses von diesen Größen Rechnung zu tragen, sind beispielsweise verschiedene thermophysikalische Eigenschaften in Form von Kennlinien oder als Bestandteile funktionaler Bestimmungsgleichungen innerhalb einer Elektronikeinheit des Durchflussmessgeräts hinterlegt.

Für eine hohe Messgenauigkeit ist grundsätzlich der thermische Kontakt zwischen dem Heizelement und dem strömenden Medium entscheidend. So kann beispielsweise eine Änderung des thermischen Widerstands des Heizelements, welche zu einer Änderung des Wärmeübergangs vom Heizelement zum Medium bei ansonsten gleich bleibenden Strömungsbedingungen führt, erhebliche Messwertverfälschungen verursachen. Eine derart verursachte Änderung des thermischen Widerstands wird auch als Sensordrift bezeichnet.

Bezüglich des thermischen Widerstands in einem Durchflussmessgerät wird zwischen einem inneren und einem äußeren thermischer Widerstand unterschieden. Der innere thermische Widerstand hängt u.a. von einzelnen Bauteilen innerhalb des Sensorelements, z.B. innerhalb der Hülsen, ab. So kann eine Sensordrift durch Fehlstellen bei Lötanbindungen aufgrund von Zugbelastungen durch Materialausdehnung oder dergleichen zustande kommen. Der äußere thermische Widerstand wird dagegen durch Belagsbildung, Materialabtrag oder Materialumwandlung (z.B. Korrosion) an den das Medium berührenden Flächen des jeweiligen Sensorelements beeinflusst. Eine Änderung des äußeren thermischen Widerstands ist somit insbesondere im Langzeitbetrieb und/oder bei Kontakt mit aggressiven Medien relevant. Im Falle von gas- oder dampfförmigen Medien kann die Messung des Massedurchflusses oder der Durchflussgeschwindigkeit darüber hinaus auch durch Kondensatsbildung an zumindest einem der Temperatursensoren beeinträchtigt werden.

Neben verschiedensten Bestrebungen, durch konstruktive Maßnahmen eine stabile thermische Kontaktierung zu gewährleisten, ist es üblich, auftretende Sensordrift zu detektieren, zu überwachen und/oder zu kompensieren. Aus den Dokumenten DE102005057687A1, DE102007023823A1, US8590360B2 oder auch WO/2008/142075A1 sind in Bezug auf Änderungen des äußeren thermischen Widerstands verschiedene Durchflussmessgeräte bekannt geworden, mittels welcher sich eine Diagnose über die verwendeten Sensorelemente tätigen lässt. Es lässt sich also eine Aussage über den Zustand von zumindest einem der jeweils verwendeten Sensorelemente treffen. Hinsichtlich des inneren thermischen Widerstands ist wiederum aus der DE102014119223B3 zur Lokalisierung von Sensordrift bekannt geworden. Insbesondere kann auf Änderungen des inneren thermischen Widerstands rückgeschlossen werden. Die US 2008/184780 A1 offenbart ein thermisches Durchflussmessgerät, bei welchem eine Sensoranordnung in einer Schutzhülse angeordnet ist.

Der vorliegenden Erfindung liegt die Aufgabe zugrunde, ein Durchflussmessgerät mit einer hohen Messgenauigkeit, sowie ein Verfahren zu dessen Herstellung, bereitzustellen.

Diese Aufgabe wird gelöst durch eine Vorrichtung nach Anspruch 1 und durch ein Verfahren nach Anspruch 12.

Die erfindungsgemäße Vorrichtung dient der Bestimmung und/oder Überwachung Bestimmung und/oder Überwachung des Massedurchflusses und/oder der Durchflussgeschwindigkeit eines strömungsfähigen Mediums durch eine Rohrleitung und umfasst zumindest ein Heizelement, welches Heizelement zumindest teilweise und/oder zeitweise mit dem Medium in thermischem Kontakt steht und welches Heizelement zumindest zeitweise mittels eines Heizsignals beaufschlagbar ist.

Erfindungsgemäß ist zumindest in einem Teilbereich zwischen dem Medium und dem Heizelement eine Einheit umfassend ein Material mit anisotroper Wärmeleitfähigkeit angeordnet. In dieser Hinsicht sind verschiedenste Ausgestaltungen denkbar, welche allesamt unter die vorliegende Erfindung fallen. Die genaue Ausgestaltung hängt dabei unter anderem vom jeweiligen Messgerät und von der jeweiligen geometrischen Situation ab. Beispielsweise können das Heizelement und die Einheit übereinander oder nebeneinander angeordnet sein. Das Heizelement kann aber auch zumindest teilweise in einem dem Medium zugewandten Bereich von der Einheit umgeben sein. Eine solche Ausgestaltung ist in Verbindung mit einem Thermometer aus der bisher unveröffentlichten deutschen Patentanmeldung mit dem Aktenzeichen102017100267.7 bekannt geworden, auf welche im Rahmen der vorliegenden Anmeldung vollumfänglich Bezug genommen wird. Es sei darauf verwiesen, dass im Rahmen der vorliegenden Erfindung die Einheit direkt zwischen dem Heizelement und dem Medium angeordnet sein kann. Ebenso können sich zwischen dem Heizelement und der Einheit bzw. zwischen der Einheit und dem Medium weitere Zwischenschichten befinden. Beispielsweise kann sich zwischen der Einheit und dem Medium eine Wandung der Rohrleitung befinden.

Zur Bestimmung und/oder Überwachung des Massedurchflusses und/oder der Durchflussgeschwindigkeit des jeweiligen Mediums wird das Heizelement mit dem Medium in, insbesondere thermischen, Kontakt gebracht. Es findet ein Wärmaustausch zwischen der Vorrichtung und dem Medium statt. Dabei ändert sich der thermische Übergangswiderstand zwischen dem jeweiligen Sensorelement und dem strömenden Medium jeweils mit der vorherrschenden Strömungsgeschwindigkeit. Es findet also eine Wärmeausbreitung bzw. ein Wärmefluss vom Heizelement zum Medium statt.

Es sind nun viele verschiedene Situationen denkbar, in welchen die Wärmeausbreitung vom Heizelement zum Medium nicht homogen bzw. isotrop ist. Beispielsweise kann der Wärmefluss vom Heizelement zum Medium aufgrund der jeweiligen, insbesondere der konstruktiven, Anordnung in einem Durchflussmessgerät zu einer anisotropen Wärmeausbreitung führen. Unterschiedliche Abstände zwischen unterschiedlichen Bereichen des Heizelements und dem Medium sowie die Qualität der verschiedenen Kontaktierungen innerhalb des Messgeräts seien hierfür beispielhaft genannt. Als Konsequenz ist der thermische Übergangswiderstand in der Praxis nicht nur vom Massedurchfluss abhängig, sondern ebenfalls von der Strömungsrichtung des Mediums, bzw. von den Einbaubedingungen, beispielsweise der Positionierung relativ zur Strömungsrichtung des Mediums.

Dies ist insbesondere problematisch, wenn das Messgerät vor einem zumindest zeitweisen und/oder teilweisen dynamischen und /oder inhomogenen thermischen Umfeld ausgesetzt ist, beispielsweise für eine Anwendung in einem strömenden Medium mit variabler Strömungsrichtung, beispielsweise im Falle eines inhomogenen Strömungsprofils.

Es versteht sich von selbst, dass eine Vielzahl weiterer Fälle zu einer Verfälschung des thermische Übergangswiderstands führen können. Als Folge können dabei jeweils erhebliche Messfehler auftreten. Um diese Problematik zu vermeiden, wird erfindungsgemäß die Einheit, welche zumindest teilweise das Material mit anisotroper Wärmeleitfähigkeit umfasst, zumindest in einem Teilbereich zwischen dem Medium und dem Heizelement angeordnet. Da die Wärmeleitfähigkeit der Einheit richtungsabhängig ist, lässt sich der Wärmestrom vom Heizelement zum Medium für ein Messgerät, ggf. für eine bestimmte angedachte Anwendung, vorteilhaft gezielt beeinflussen.

In einer bevorzugten Ausgestaltung ist die Einheit dazu ausgestaltet, zu gewährleisten, dass der thermische Übergangswiderstand der Vorrichtung unabhängig von der Anströmrichtung des Mediums, bzw. unabhängig vom vorherrschenden Strömungsprofil des Mediums ist. Insbesondere sorgt die Einheit also dafür, dass, insbesondere unabhängig vom thermischen Umfeld der Vorrichtung, eine homogene Wärmeausbreitung vom Sensorkopf zum Medium stattfinden kann. Ebenso sorgt die Einheit bevorzugt dafür, dass der thermische Übergangswiderstand unabhängig von gewissen Fertigungstoleranzen und konstruktiv bedingten asymmetrischen geometrischen Gegebenheiten im Bereich der Vorrichtung ist.

Erfindungsgemäß umfasst die Einheit eine Schicht oder eine Beschichtung, welche Schicht oder Beschichtung zumindest teilweise aus dem Material mit anisotroper Wärmeleitfähigkeit besteht oder eine dünnwandige Folie, welche Folie zumindest teilweise aus dem Material mit anisotroper Wärmeleitfähigkeit besteht. Die Schicht weist erfindungsgemäß in Längsrichtung, also entlang einer Ebene parallel zu der Schicht oder Beschichtung, eine größere Wärmeleitfähigkeit auf, als senkrecht dazu, bzw. senkrecht zu der Ebene. Hierdurch wird der Wärmestrom gezielt entlang der Einheit umverteilt.

Die Folie weist ebenfalls erfindungsgemäß entlang ihrer Längsrichtung eine höhere Wärmeleitfähigkeit auf, als senkrecht dazu.

Gemäß einer weiteren besonders bevorzugten Ausgestaltung handelt es sich bei dem Material mit anisotroper Wärmeleitfähigkeit um ein zumindest teilweise Kohlenstoff enthaltendes Material, insbesondere Graphit, oder um hexagonales Bornitrid.

In einer Ausgestaltung der Vorrichtung ist/sind das Heizelement und/oder die Einheit zumindest teilweise innerhalb eines Sensorkopfes angeordnet. Bevorzugt ist die Einheit derart ausgestaltet und/oder angeordnet, dass sie den Temperatursensor und das Messelement zumindest teilweise umgibt. Die Einheit sorgt also für eine Wärmeverteilung in Umfangsrichtung des Sensorkopfes.

Hierbei ist es von Vorteil, wenn die Vorrichtung einen Füllstoff umfasst, welcher zumindest teilweise innerhalb des Sensorkopfes angeordnet ist, und einen Innenraum des Sensorkopfes zumindest teilweise, vorzugsweise vollständig, ausfüllt. Die Einheit, welche ebenfalls zumindest teilweise innerhalb des Sensorkopfes angeordnet ist, ist bevorzugt ebenfalls zumindest teilweise von dem Füllstoff umgeben. Bei dem Füllstoff handelt es sich insbesondere um ein Material mit einer im Wesentlichen homogenen thermischen Leitfähigkeit und/oder thermischen Kapazität. Der Füllstoff gewährleistet also eine im Wesentlichen homogene Wärmeausbreitung, insbesondere isotrope, Wärmeausbreitung innerhalb des Sensorkopfes. Beispielsweise kann der Füllstoff ein Zement, insbesondere um eine Mischung aus Magnesiumoxid, Zirkonsilikat und Magnesiumphosphat, sein.

Es ist ebenso von Vorteil, wenn die Einheit derart ausgestaltet und/oder angeordnet ist, dass sie parallel zur Umfangsrichtung des Sensorkopfes eine höhere, insbesondere zumindest 10fach größere, insbesondere zumindest 30fach höhere, Wärmeleitfähigkeit aufweist als senkrecht zur Umfangsrichtung. Diese Ausgestaltung ist insbesondere vorteilhaft für den Einsatz in einem zumindest zeitweise und/oder teilweise dynamischen und/oder inhomogenen thermischen Umfeld geeignet, beispielsweise für Anwendungen in strömenden Medien mit inhomogenem Strömungsprofil oder auch im Falle variabler Strömungsgeschwindigkeiten.

Schließlich ist es ebenfalls für die Ausgestaltung der Vorrichtung mit einem Sensorkopf von Vorteil, wenn die Einheit zumindest teilweise an einem dem Inneren des Sensorkopfes zugewandten Teilbereich einer Wandung des Sensorkopfes befestigt ist. Die Einheit ist also im Bereich der dem Medium zugewandten Oberfläche des Sensorkopfes angeordnet. Die Einheit sorgt für eine Umfangsverteilung eines Wärmestroms entlang der Oberfläche des Sensorkopfes. Von der Oberfläche des Sensorkopfes ausgehend findet dann, im Falle einer entsprechenden Ausgestaltung des Sensorkopfes, vorteilhaft eine im Wesentlichen homogene Wärmeausbreitung zum Medium statt.

Beispielsweise ist die Einheit mittels zumindest eines Teils des Füllstoffes, und/oder mittels eines Befestigungselements, beispielsweise in Form eines rohrförmigen Elements, an der Wandung des Sensorkopfes befestigt. Bei dem rohrförmigen Element handelt es sich insbesondere um ein Keramikrohr, welches Keramikrohr einen Außendurchmesser aufweist, welcher im Wesentlichen einem Innendurchmesser des Sensorkopfes entspricht, bzw. geringfügig kleiner ist als der Innendurchmesser des Sensorkopfes derart, dass das rohrförmige Element im Wesentlichen passgenau innerhalb des Sensorkopfes angeordnet werden kann.

Eine alternative Ausgestaltung sieht vor, dass die Einheit an einer Wandung der Rohrleitung befestigt oder in eine Rohrleitung integriert ist. In dieser Hinsicht sind alle dem Fachmann geläufigen Möglichkeiten zur Befestigung der Einheit an der Rohrleitung, beispielsweise mittels einer Klebung, Lötung oder ähnlichem, sowie sämtliche allgemein bekannten Möglichkeiten, die Einheit in eine Rohrleitung zu integrieren, beispielsweise durch einen Verguss oder ähnliches, denkbar, und fallen unter die vorliegende Erfindung.

Für diese alternative Ausgestaltung ist es von Vorteil, wenn das Heizelement zumindest abschnittsweise an der Einheit angebracht ist derart, dass das Heizelement im dem Medium abgewandten Bereich der Einheit angeordnet ist. In diesem Falle befindet sich sie Einheit also im dem Medium zugewandten Bereich zumindest abschnittsweise, bevorzugt vollständig, zwischen dem Medium und der Heizeinheit angeordnet.

Ebenso ist es von Vorteil, wenn die Einheit derart ausgestaltet und/oder angeordnet ist, dass sie parallel zur Umfangsrichtung Rohrleitung eine höhere, insbesondere zumindest 10fach größere, insbesondere zumindest 30fach höhere, Wärmeleitfähigkeit aufweist als senkrecht zur Umfangsrichtung.

Eine besonders bevorzugte Ausgestaltung der erfindungsgemäßen Vorrichtung beinhaltet, dass die Einheit in Abhängigkeit des Heizsignals derart dimensioniert und/oder angeordnet ist, dass eine vorgebbare Wärmemenge von dem Heizelement zum Medium übertragen wird.

In dieser Hinsicht ist bevorzugt zumindest ein Flächeninhalt zumindest einer Teilfläche der Einheit in Abhängigkeit des Heizsignals derart dimensioniert, dass eine vorgebbare Wärmemenge von dem Heizelement zum Medium übertragen wird.

Die erfindungsgemäße Aufgabe wird ferner gelöst durch ein Verfahren zur Herstellung einer erfindungsgemäßen Vorrichtung, wobei ein Heizelement derart angeordnet wird, dass das Heizelement zumindest teilweise und/oder zeitweise mit dem Medium in thermischem Kontakt steht, und wobei zumindest in einem Teilbereich zwischen dem Medium und dem Heizelement eine Einheit umfassend ein Material mit anisotroper Wärmeleitfähigkeit angeordnet wird.

Beispielsweise wird/werden das Heizelement und/oder die Einheit zumindest teilweise in dem Sensorkopf angeordnet.

Beispielsweise wird die Einheit an einer Wandung der Rohrleitung angebracht, wobei das Heizelement zumindest abschnittsweise an der Einheit angebracht wird derart, dass das Heizelement im dem Medium abgewandten Bereich der Einheit angeordnet ist.

Es sei darauf verwiesen, dass die in Zusammenhang mit der Vorrichtung erläuterten Ausgestaltungen mutatis mutandis auch auf das vorgeschlagene Verfahren anwendbar sind und umgekehrt.

Die Erfindung wird anhand der nachfolgenden Zeichnungen näher erläutert. Es zeigt:
Fig. 1: eine schematische Darstellung eines Durchflussmessgeräts, bei welchem ein Heizelement und eine erfindungsgemäße Einheit in einem Sensorkopf angeordnet sind,
Fig. 2: eine schematische Darstellung eines Durchflussmessgeräts, bei welchem die Einheit und das Heizelement an einer Wandung der Rohrleitung angebracht werden, und
Fig. 3: ein schematisches Diagramm zur Veranschaulichung des Einflusses der geometrischen Ausgestaltung der Einheit auf die Bestimmung des Durchflusses.

In den Figuren sind gleiche Merkmale mit gleichen Bezugszeichen gekennzeichnet.

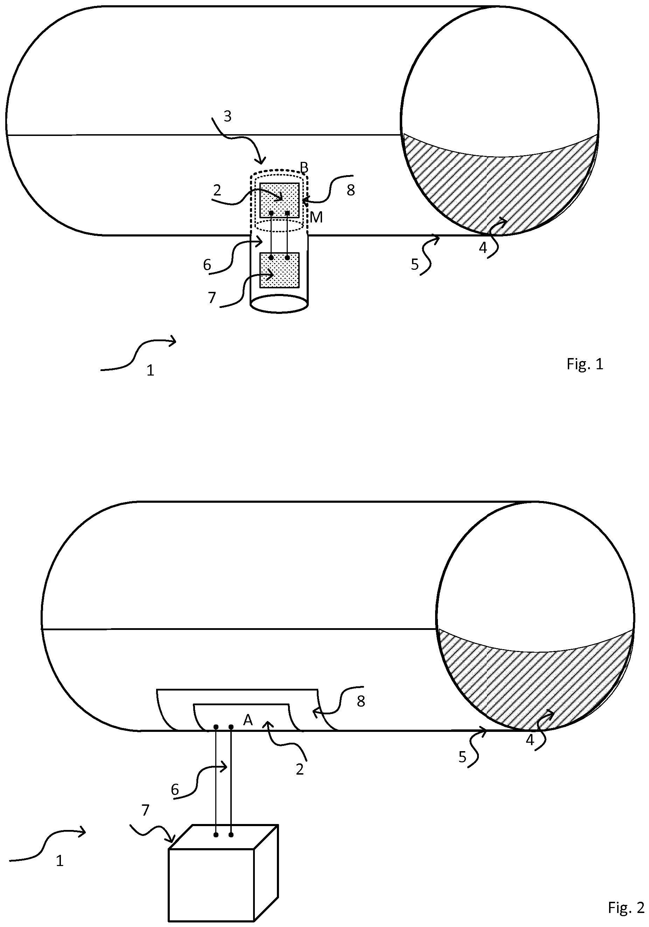

In Fig. 1 ist ein thermisches Durchflussmessgerät 1 gezeigt, bei welchem ein Heizelement 2 in einem Sensorkopf 3 angeordnet ist. Der Sensorkopf 3 ist ragt wiederum in eine ein Medium 4 führende Rohrleitung 5. Zur Anbringung des Messgeräts 1 an die Rohrleitung 5 sind im Rahmen der vorliegenden Erfindung sämtliche dem Fachmann wohlbekannte Möglichkeiten denkbar und fallen unter die vorliegende Erfindung.

Das Heizelement 2 steht mittels des Sensorkopfes 3 zumindest teilweise und zumindest zeitweise mit dem Medium 4 in thermischem Kontakt. Im vorliegenden Beispiel ist der Sensorkopf 3 zylindrisch ausgestaltet - die vorliegende Erfindung ist jedoch keineswegs auf zylindrische Symmetrien des Sensorkopfes 3 beschränkt. In anderen Ausgestaltungen der vorliegenden Erfindung kann das Gerät ferner auch zwei Heizelemente 2 oder ein Heizelement 2 und einen weiteren Temperatursensor [nicht gezeigt] umfassen. Mittels der Anschlussdrähte 6 ist das Heizelement 2 mit einer Elektronikeinheit 7 verbunden, welche der Signalerfassung, -auswertung und -speisung dient. Es sei darauf verwiesen, dass von Ausgestaltung zu Ausgestaltung die Anzahl an verwendeten Anschlussdrähten variieren kann.

Das Heizelement 2 steht mittels des Sensorkopfes 3 zumindest teilweise und/oder zeitweise mit dem Medium 4 in thermischem Kontakt.

Im fortlaufenden Betrieb kann das Heizelement 2 zur Bestimmung des Durchflusses oder der Durchflussgeschwindigkeit beispielsweise durch Zuführung einer variablen Heizleistung P auf eine vorgebbare Temperatur T geheizt oder durch Zuführung einer konstanten Heizleistung P bei variabler Temperatur T betrieben werden. Grundsätzlich findet also ein Wärmaustausch zwischen dem Messgerät 1 und dem Medium 4, bzw. eine Wärmeausbreitung bzw. ein Wärmefluss vom Heizelement 2 zum Medium 4, statt. Dabei ändert sich der thermische Übergangswiderstand zwischen dem Heizelement 2 und dem strömenden Medium 4 jeweils mit der vorherrschenden Strömungsgeschwindigkeit v.

Zum Zwecke einer hohen Messgenauigkeit gilt es zu gewährleisten, dass die Wärmeausbreitung vom Heizelement 2 zum Medium 4 möglichst homogen ist. Beispielsweise kann der Wärmefluss vom Heizelement 2 zum Medium 4 aufgrund der jeweiligen, insbesondere der konstruktiven, Anordnung im Durchflussmessgerät 1 zu einer anisotropen Wärmeausbreitung führen. Unterschiedliche Abstände zwischen unterschiedlichen Bereichen des Heizelements 2 und dem Medium sowie die Qualität der verschiedenen Kontaktierungen innerhalb des Messgeräts 1 seien hier beispielhaft genannt. Als Konsequenz ist der thermische Übergangswiderstand in der Praxis nicht nur vom Massedurchfluss abhängig, sondern ebenfalls von der Strömungsrichtung des Mediums 4, bzw. von den Einbaubedingungen, beispielsweise der Positionierung relativ zur Strömungsrichtung des Mediums 4. Dies ist insbesondere problematisch, wenn das Messgerät 1 vor einem zumindest zeitweisen und/oder teilweisen dynamischen und /oder inhomogenen thermischen Umfeld ausgesetzt ist, beispielsweise für eine Anwendung in einem strömenden Medium 4 mit variabler Strömungsrichtung, beispielsweise im Falle eines inhomogenen Strömungsprofils.

Erfindungsgemäß verfügt das thermische Durchflussmessgerät 1 zur Vermeidung von durch derartige Probleme verursachter Messungenauigkeiten weiterhin über eine Einheit 8 umfassend ein Material mit anisotroper Wärmeleitfähigkeit. Beispielsweise besteht die Einheit zumindest teilweise aus Graphit. Die Einheit 8 ist zumindest in einem Teilbereich zwischen dem Medium und dem Heizelement 2 angeordnet. Im vorliegenden Ausführungsbeispiel ist sie zusammen mit dem Heizelement 2 in dem Sensorkopf 3 angeordnet und umgibt das Heizelement 2. Ein vom Heizelement 2 ausgehender Wärmestrom kann entsprechend mittels der Einheit 8 gezielt beeinflusst werden, insbesondere mit Hinblick auf die Ausbreitungsrichtung der jeweiligen Wärmemenge. Im vorliegenden Ausführungsbeispiel handelt es sich bei der Einheit 8 um eine dünnwandige Folie in Form einer zylindrischen Hülse mit einer Bodenfläche B und einer Mantelfläche M, welche das Heizelement 2 im dem Medium 4 zugewandten Bereich vollständig umgibt. Andere mögliche Ausgestaltungen für eine erfindungsgemäße Einheit 8 können beispielsweise aus der bisher unveröffentlichten deutschen Patentanmeldung mit dem Aktenzeichen102017100267.7 entnommen werden. Ferner können in einem weiteren Fertigungsschritt verbleibende Hohlräume innerhalb des Sensorkopfes 3 mit einem geeigneten, insbesondere elektrisch isolierenden, Füllstoff [nicht gezeigt], insbesondere einem Zement, gefüllt werden.

Da die Wärmeleitfähigkeit der Einheit 8 richtungsabhängig ist, lässt sich der Wärmestrom vom Heizelement 2 zum Medium 4 für das Messgerät 1, ggf. für eine bestimmte angedachte Anwendung, vorteilhaft gezielt beeinflussen. Im vorliegenden Beispiel sorgt die Einheit 8 dafür, dass der Wärmestrom zum Medium 4 isotrop ist.

Bevorzugt ist die Einheit 8 dazu ausgestaltet, zu gewährleisten, dass der thermische Übergangswiderstand jeweils unabhängig von der Anströmrichtung des Sensorkopfes 3 durch das Medium 4, bzw. unabhängig vom vorherrschenden Strömungsprofil des Mediums 4. Ebenso sorgt die Einheit 8 bevorzugt dafür, dass der thermische Übergangswiderstand unabhängig von gewissen Fertigungstoleranzen und konstruktiv bedingten asymmetrischen geometrischen Gegebenheiten im Bereich des Messgeräts 1, insbesondere im Bereich des Sensorkopfes 3, ist. Im vorliegenden Beispiel ist die Wärmeleitfähigkeit der Einheit 8 bevorzugt in Umfangsrichtung, also parallel zur Mantelfläche M der zylindrisch ausgestalteten Folie, größer als senkrecht dazu. Die Wärmeausbreitung zum Medium 4 erfolgt also unabhängig von der Anordnung der Heizeinheit 2 innerhalb des Sensorkopfes 3 ausgehend von der Wandung des Sensorkopfes 3 homogen in alle Richtungen.

Eine zweite mögliche erfindungsgemäße Ausgestaltung eines thermischen Durchflussmessgeräts 1 ist in Fig. 2 gezeigt. In diesem Beispielsind die Einheit 8 und das Heizelement 2 auf die äußere Wandung der das Medium 4 führenden Rohrleitung 5 aufgebracht. Alternativ können die Einheit 8 und/oder das Heizelement 2 auch zumindest teilweise in die Rohrleitung 5 integriert sein. In jedem Falle befindet sich die Einheit 8 zwischen dem Heizelement 2 und dem Medium 4.

Die Einheit 8 selbst kann beispielsweise ebenso wie im Falle der Fig. 1 als dünnwandige Folie ausgestaltet sein, oder auch als eine auf die Rohrleitung 5 aufgebrachte Beschichtung. In dieser Ausgestaltung ist die Wärmeleitfähigkeit der Einheit 8 bevorzugt parallel zur Wandung der Rohrleitung 5, also entlang der Fläche A größer als senkrecht dazu. Eine vom Heizelement 2 ausgehende Wärmemenge wird sich also zuerst entlang der Fläche A ausbreiten und anschließend von der Einheit 8 über die Wandung der Rohrleitung 5 zum Medium 4.

Die Elektronikeinheit 7 ist für das Beispiel der Fig. 2 separat vom Sensorkopf 3 angeordnet und mittels der Anschlussleitungen 6 mit dem Heizelement 2 verbunden. Alternativ kann auch für die Ausgestaltung in Fig. 1 eine separat angeordnete Elektronikeinheit 7 verwendet werden, oder auch das Durchflussmessgerät 1 gemäß Fig. 2 in Kompaktbauweise wie in Fig. 1 dargestellt, ausgeführt werden.

Die geometrische Ausgestaltung und Dimensionierung der Einheit 8 bestimmt die Größe einer sogenannten Heizfläche und kann erfindungsgemäß derart gewählt werden, dass durch die Einheit 8 in Abhängigkeit des jeweils verwendeten Heizsignals eine vorgebbare Wärmemenge von dem Heizelement 2 zum Medium 4 übertragen wird. Im Falle der Fig. 1 kann die Heizfläche beispielsweise durch Variation der Mantelfläche M bzw. des Flächeninhalts der Mantelfläche M der Einheit 8 passend gewählt werden; im Falle der Ausgestaltung gemäß Fig. 2 dagegen kann der Flächeninhalt der Fläche A parallel zur Wandung der Rohrleitung 5 variiert werden.

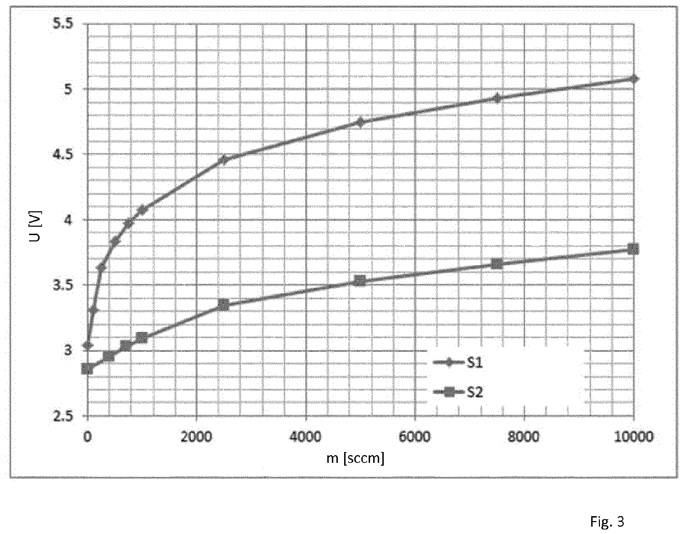

Fig. 3 zeigt beispielhaft für zwei Messgeräte 1 mit je einem gleichen in einem gleich ausgestalteten Sensorkopf 3 angeordneten Heizelementen 2 und zwei Einheiten 8 aus dem gleichen Material mit jeweils unterschiedlichen Flächeninhalten der Mantelflächen M jeweils eine sogenannte Sensorkennlinie, welche eine Heizspannung U als Funktion des Massendurchflusses m angibt. Dabei entspricht die Kennlinie S1 einer kleinen Mantelfläche M und die Kennlinie S2 einer großen Mantelfläche M. Die exakten Größen der jeweiligen Mantelflächen sind für die auftretenden Tendenzen, welche hier hervorgehoben werden sollen, unerheblich. Durch geeignete Wahl des Flächeninhalts der Einheit 8 lässt sich die jeweilige Kennlinie gezielt beeinflussen. So führt beispielsweise eine Vergrößerung der Heizfläche, welche beispielsweise durch eine Verteilung der gleichen Heizleistung auf eine größere Fläche mittels der Einheit 8 erreicht werden kann, zu einem flacheren Verlauf der Kennlinie. Auf diese Weise ist ein vergrößerter Dynamikbereich abgedeckt. Dagegen sind kleinere Heizflächen im Falle höherer gewünschter Sensitivitäten des jeweiligen Messgeräts und insbesondere im Falle von kleinen Strömungsgeschwindigkeiten vorteilhaft. Die Einheit 8 ermöglicht also nicht nur eine Homogenisierung der Wärmeverteilung, sondern darüber hinaus die Möglichkeit einer gezielten Anpassung der Sensorkennlinie auf eine bestimmte Applikation, beispielsweise an die Strömungsbedingungen des Mediums 4.

## Patentansprüche

1. Vorrichtung (1) zur Bestimmung und/oder Überwachung des Massedurchflusses und/oder der Durchflussgeschwindigkeit eines strömungsfähigen Mediums (4) durch eine Rohrleitung (5)
umfassend zumindest ein Heizelement (2), welches Heizelement (2) zumindest teilweise und/oder zeitweise mit dem Medium (4) in thermischem Kontakt steht und welches Heizelement (2) zumindest zeitweise mittels eines Heizsignals beaufschlagbar ist,
**gekennzeichnet dadurch,**
**dass** zumindest in einem Teilbereich zwischen dem Medium (4) und dem Heizelement (2) eine Einheit (8) umfassend ein Material mit anisotroper Wärmeleitfähigkeit angeordnet ist,
**dass** die Einheit (8) eine Schicht oder eine Beschichtung, welche Schicht oder Beschichtung zumindest teilweise aus dem Material mit anisotroper Wärmeleitfähigkeit besteht, oder eine dünnwandige Folie welche Folie zumindest teilweise aus dem Material mit anisotroper Wärmeleitfähigkeit besteht, umfasst, und dass die Schicht, Beschichtung oder Folie entlang ihrer Längsrichtung eine höhere Wärmeleitfähigkeit aufweist als senkrecht zu ihrer Längsrichtung.

2. Vorrichtung (1) nach zumindest einem der vorhergehenden Ansprüche,
wobei es sich bei dem Material mit anisotroper Wärmeleitfähigkeit um ein zumindest teilweise Kohlenstoff enthaltendes Material oder um hexagonales Bornitrid handelt.

3. Vorrichtung (1) nach zumindest einem der vorherigen Ansprüche,
wobei es sich bei dem zumindest teilweise Kohlenstoff enthaltendes Material um Graphit handelt.

4. Vorrichtung (1) nach zumindest einem der vorherigen Ansprüche,
wobei das Heizelement (2) und/oder die Einheit (8) zumindest teilweise in einem Sensorkopf (3) angeordnet ist/sind.

5. Vorrichtung (1) nach Anspruch 4,
umfassend einen Füllstoff, welcher zumindest teilweise innerhalb des Sensorkopfes (3) angeordnet ist, und einen Innenraum des Sensorkopfes (3) zumindest teilweise, ausfüllt.

6. Vorrichtung (1) nach zumindest einem Ansprüche 4 oder 5,
wobei die Einheit (8) derart ausgestaltet und/oder angeordnet ist, dass sie parallel zur Mantelfläche des Sensorkopfes (3) eine höhere Wärmeleitfähigkeit aufweist als senkrecht zur Mantelfläche.

7. Vorrichtung (1) nach zumindest einem der Ansprüche 1 bis 3,
wobei die Einheit (8) an einer Wandung der Rohrleitung (5) befestigt, oder in eine Rohrleitung (5) integriert ist.

8. Vorrichtung (1) nach Anspruch 7,
wobei das Heizelement (2) zumindest abschnittsweise an der Einheit (8) angebracht ist derart, dass das Heizelement (2) im dem Medium (4) abgewandten Bereich der Einheit (8) angeordnet ist.

9. Vorrichtung (1) nach einem der Ansprüche 7 oder 8,
wobei die Einheit (8) derart ausgestaltet und/oder angeordnet ist, dass sie parallel zur Mantelfläche der Rohrleitung (5) eine höhere Wärmeleitfähigkeit aufweist als senkrecht zur Mantelfläche.

10. Vorrichtung (1) nach zumindest einem der vorhergehenden Ansprüche, wobei die Einheit (8) in Abhängigkeit des Heizsignals derart dimensioniert und/oder angeordnet ist, dass eine vorgebbare Wärmemenge von dem Heizelement (2) zum Medium (4) übertragen wird.

11. Vorrichtung (1) nach Anspruch 10,
wobei zumindest ein Flächeninhalt einer Teilfläche (M,A) der Einheit (8) in Abhängigkeit des Heizsignals derart dimensioniert ist, dass eine vorgebbare Wärmemenge von dem Heizelement (2) zum Medium (4) übertragen wird.

12. Verfahren zur Herstellung einer Vorrichtung (1) nach zumindest einem der vorhergehenden Ansprüche, wobei ein Heizelement (2) derart angeordnet wird, dass das Heizelement (2) zumindest teilweise und/oder zeitweise mit dem Medium (4) in thermischem Kontakt steht, und wobei zumindest in einem Teilbereich zwischen dem Medium (4) und dem Heizelement (2) eine Einheit (8) umfassend ein Material mit anisotroper Wärmeleitfähigkeit angeordnet wird.

## Claims

1. A device (1) for determining and/or monitoring the mass flow and/or the flow velocity of a flowable medium (4) through a pipeline (5),
comprising at least one heating element (2), said heating element (2) being at least partly and/or temporarily in thermal contact with the medium (4), and said heating element (2) being at least temporarily exposed to a heating signal,
**characterized in that**
a unit (8) comprising a material with anisotropic thermal conductivity is arranged at least in a section between the medium (4) and the heating element (2),
the unit (8) comprises a layer or a coating, said layer or coating consisting at least partly of the material with anisotropic thermal conductivity, or a thin-walled film, said film consisting at least partly of the material with anisotropic thermal conductivity, and **in that** the layer, coating or film has higher thermal conductivity in its longitudinal direction than perpendicular to its longitudinal direction.

2. The device (1) as claimed in at least one of the preceding claims,
wherein the material with anisotropic thermal conductivity is a material containing at least some proportion of carbon, or is hexagonal boron nitride.

3. The device (1) as claimed in at least one of the preceding claims,
wherein the material containing at least some proportion of carbon is graphite.

4. The device (1) as claimed in at least one of the preceding claims,
wherein the heating element (2) and/or the unit (8) is/are arranged at least partly in a sensor head (3).

5. The device (1) as claimed in claim 4,
comprising a filler, which is arranged at least partly inside the sensor head (3) and at least partly fills an interior space of the sensor head (3).

6. The device (1) as claimed in at least one of claims 4 or 5,
wherein the unit (8) is configured and/or arranged in such a way that it has higher thermal conductivity parallel to the outer surface of the sensor head (3) than perpendicular to the outer surface.

7. The device (1) as claimed in at least one of claims 1 to 3,
wherein the unit (8) is mounted on a wall of the pipeline (5), or is integrated into a pipeline (5).

8. The device (1) as claimed in claim 7,
wherein the heating element (2) is attached to the unit (8) at least in one section in such a way that the heating element (2) is arranged in the area of the unit (8) facing away from the medium (4).

9. The device (1) as claimed in one of claims 7 or 8,
wherein the unit (8) is configured and/or arranged in such a way that it has higher thermal conductivity parallel to the outer surface of the pipeline (5) than perpendicular to the outer surface.

10. The device (1) as claimed in at least one of the preceding claims, wherein the unit (8) is dimensioned and/or arranged based on the heating signal in such a way that a specifiable quantity of heat is transferred from the heating element (2) to the medium (4).

11. The device (1) as claimed in claim 10,
wherein at least a surface area of a sub-area (M,A) of the unit (8) is dimensioned based on the heating signal in such a way that a specifiable quantity of heat is transferred from the heating element (2) to the medium (4).

12. A method for manufacturing a device (1) as claimed in at least one of the preceding claims, wherein a heating element (2) is arranged in such a way that the heating element (2) is at least partly and/or temporarily in thermal contact with the medium (4), and wherein a unit (8) comprising a material with anisotropic thermal conductivity is arranged at least in a section between the medium (4) and the heating element (2).

## Revendications

1. Dispositif (1) destiné à la détermination et/ou à la surveillance du débit massique et/ou de la vitesse d'écoulement d'un produit (4) apte à s'écouler à travers une conduite (5),
lequel dispositif comprend au moins un élément chauffant (2), lequel élément chauffant (2) est au moins partiellement et/ou temporairement en contact thermique avec le produit (4) et lequel élément chauffant (2) peut être sollicité au moins temporairement au moyen d'un signal de chauffage,
**caractérisé en ce**
**qu'**une unité (8) comprenant un matériau à conductivité thermique anisotrope est disposée au moins dans une zone partielle entre le produit (4) et l'élément chauffant (2),
en ce que l'unité (8) comprend une couche ou un revêtement, laquelle couche ou revêtement est constitué au moins partiellement du matériau à conductivité thermique anisotrope, ou une feuille à paroi mince, laquelle feuille est constituée au moins partiellement du matériau à conductivité thermique anisotrope, et
en ce que la couche, le revêtement ou la feuille présente une conductivité thermique plus élevée le long de sa direction longitudinale que perpendiculairement à sa direction longitudinale.

2. Dispositif (1) selon la revendication précédente,
pour lequel le matériau à conductivité thermique anisotrope est un matériau contenant au moins partiellement du carbone ou un nitrure de bore hexagonal.

3. Dispositif (1) selon au moins l'une des revendications précédentes,
pour lequel le matériau contenant au moins partiellement du carbone est du graphite.

4. Dispositif (1) selon au moins l'une des revendications précédentes,
pour lequel l'élément chauffant (2) et/ou l'unité (8) est/sont disposé(s) au moins partiellement dans une tête de capteur (3).

5. Dispositif (1) selon la revendication 4,
lequel dispositif comprend un matériau de remplissage qui est disposé au moins partiellement à l'intérieur de la tête de capteur (3) et qui remplit au moins partiellement un espace intérieur de la tête de capteur (3).

6. Dispositif (1) selon au moins l'une des revendications 4 ou 5,
pour lequel l'unité (8) est conçue et/ou disposée de telle sorte qu'elle présente une conductivité thermique plus élevée parallèlement à la surface latérale de la tête de capteur (3) que perpendiculairement à la surface latérale.

7. Dispositif (1) selon au moins l'une des revendications 1 à 3,
pour lequel l'unité (8) est fixée à une paroi de la conduite (5), ou est intégrée dans une conduite (5).

8. Dispositif (1) selon la revendication 7,
pour lequel l'élément chauffant (2) est monté au moins par sections sur l'unité (8) de manière à ce que l'élément chauffant (2) soit disposé dans la zone de l'unité (8) opposée au produit (4).

9. Dispositif (1) selon l'une des revendications 7 ou 8,
pour lequel l'unité (8) est conçue et/ou disposée de telle sorte qu'elle présente une conductivité thermique plus élevée parallèlement à la surface latérale de la conduite (5) que perpendiculairement à la surface latérale.

10. Dispositif (1) selon au moins l'une des revendications précédentes,
pour lequel l'unité (8) est dimensionnée et/ou disposée en fonction du signal de chauffage de telle sorte qu'une quantité de chaleur pouvant être prédéfinie est transmise de l'élément chauffant (2) au produit (4).

11. Dispositif (1) selon la revendication 10,
pour lequel au moins une superficie d'une surface partielle (M, A) de l'unité (8) est dimensionnée en fonction du signal de chauffage de telle sorte qu'une quantité de chaleur pouvant être prédéfinie est transmise de l'élément chauffant (2) au produit (4).

12. Procédé destiné à la fabrication d'un dispositif (1) selon au moins l'une des revendications précédentes, procédé
pour lequel on dispose un élément chauffant (2) de manière à ce que l'élément chauffant (2) soit au moins partiellement et/ou temporairement en contact thermique avec le produit (4), et
pour lequel on dispose au moins dans une zone partielle entre le produit (4) et l'élément chauffant (2) une unité (8) comprenant un matériau ayant une conductivité thermique anisotrope.
